# EUROPÄISCHE PATENTANMELDUNG

(11) **EP 3 308 904 A1**
(43) Veröffentlichungstag der Anmeldung: **18.04.2018**
(21) Anmeldenummer: 17192518.3
(22) Anmeldetag: 22.09.2017
(51) Int. Cl.: B23Q 3/155, B24B 19/02, B24B 27/00, B24B 41/04, B24B 41/02, B24B 53/053, B24B 55/02

(54) **WERKSTÜCKBEARBEITUNGSVORRICHTUNG**

(30) Priorität: 22.09.2016 DE 102016117915
(71) Anmelder: Elb-Schliff Werkzeugmaschinen GmbH, 63743 Aschaffenburg (DE)
(72) Erfinder: Mayr, Günther, 87727 Babenhausen (DE); Stanik, Markus, 63743 Aschaffenburg (DE)
(74) Vertreter: 2s-ip Schramm Schneider Bertagnoll Patent- und Rechtsanwälte Part mbB

(57) **Zusammenfassung**

Bereitgestellt wird eine Werkstückbearbeitungsvorrichtung (1), insbesondere Schleifvorrichtung, mit zumindest einem Spindelmodul (10.1) und einem Werkzeugwechsler (30), wobei
- das Spindelmodul angepasst ist, ein Werkzeug (13.1), insbesondere Schleifscheibe, zur Bearbeitung eines Werkstückes (40) aufzunehmen,
- das Spindelmodul entlang einer vertikalen Translationsachse (Y3) verfahrbar an einem Spindelmodulhalter (5) angeordnet ist,
- wobei das Spindelmodul (10.1) eine Spindel (11.1), insbesondere Schleifspindel, zur Aufnahme des Werkzeuges und einen Abrichter (12.1) aufweist, wobei der Abrichter und die Spindel unabhängig voneinander und relativ zueinander an dem Spindelmodul (10.1) verfahrbar sind, und
- der Werkzeugwechsler (30) angepasst ist
- zumindest ein Werkzeug aus einem Werkzeugmagazin (35) zu entnehmen und an einer Spindel (11.1, 11.2) zu befestigen und
- ein an einer Spindel befestigtes Werkzeug aufzunehmen und in dem Werkzeugmagazin abzulegen.

## Beschreibung

### Gebiet der Erfindung

Die Erfindung betrifft eine Werkstückbearbeitungsvorrichtung, insbesondere Schleifvorrichtung, zum Bearbeiten eines Werkstückes.

### Hintergrund der Erfindung

Werkstückbearbeitungsvorrichtungen, etwa Schleifvorrichtungen, sind aus dem Stand der Technik bekannt. Derartige Schleifvorrichtungen weisen eine Schleifspindel zur Aufnahme einer Schleifscheibe und ein Spannfutter zur Aufnahme des zu bearbeitenden Werkstückes auf. Die Schleifspindel und/oder das Spannfutter sind relativ zueinander verfahrbar, um das zu bearbeitende Werkstück in Wirkkontakt mit der Schleifscheibe zu bringen. Während des Schleifvorganges kann die Schleifspindel relativ zum zu bearbeitenden Werkstück verfahren werden, um die Oberfläche des Werkstückes gemäß einer vorgegebenen Geometrie zu bearbeiten bzw. zu schleifen. Die Schleifspindel ist hierbei meist entlang zweier Achsen verfahrbar, die senkrecht zueinander und senkrecht zur Längsachse der Schleifspindel stehen.

Nachteilig hierbei ist allerdings, dass für die Oberflächenbearbeitung eines Werkstückes, bei dem mehrere Seiten bearbeitet werden müssen, mehrere unterschiedliche Schleifschritte sequenziell durchgeführt werden müssen, sodass die Dauer des gesamten Oberflächenbearbeitungsvorganges der Summe der einzelnen Schleifschritte entspricht, was sich insbesondere dann negativ auswirkt, wenn eine große Anzahl von Werkstücken bearbeitet werden müssen.

Ein weiterer Nachteil liegt darin, dass das zu bearbeitende Werkstück während eines Schleifvorganges lediglich einseitig über die Schleifscheibe mit einer Kraft beaufschlagt wird, was insbesondere bei Werkstücken mit geringen Stärken dazu führen kann, dass sich die Geometrie des Werkstückes ändert oder dass die mit der Schleifscheibe hergestellte Oberflächengeometrie nicht exakt der gewünschten Oberflächengeometrie entspricht. Um dieses Problem zu umgehen, wird versucht, das zu bearbeitende Werkstück so in das Spannfutter einzuspannen, dass sich das Werkstück während des Schleifvorganges nicht verformen kann. Dies ist allerdings nicht in jedem Fall möglich.

Weiterhin bringt die einseitige Bearbeitung Spannungen in das Werkstück ein, welche sich besonders bei hochbeanspruchten Bauteilen sehr negativ auf die Lebensdauer auswirken kann.

### Aufgabe der Erfindung

Aufgabe der vorliegenden Erfindung ist es daher, eine Werkstückbearbeitungsvorrichtung, insbesondere Schleifvorrichtung bereitzustellen, die die aus dem Stand der Technik bekannten Nachteile zumindest teilweise vermeidet und die es erlaubt, die Dauer der Oberflächenbearbeitung eines Werkstückes erheblich zu reduzieren, damit sich die Werkstückbearbeitungsvorrichtung insbesondere für die Serienfertigung von Werkstücken eignet, wobei auch die Rüstzeiten erheblich reduziert werden sollen, sodass auch Werkstücke, die mit unterschiedlichen Werkzeugen bearbeitet werden müssen, effizient und zeitsparend bearbeitet werden können. Zudem soll eine möglichst flexible Bearbeitung eines Werkstückes ermöglicht werden.

### Erfindungsgemäße Lösung

Erfindungsgemäß wird diese Aufgabe mit einer Werkstückbearbeitungsvorrichtung und mit einem Spindelmodul für eine Werkstückbearbeitungsvorrichtung nach den unabhängigen Ansprüchen gelöst. Vorteilhafte Ausgestaltungen der Erfindung sind in den jeweiligen abhängigen Ansprüchen angegeben.

Bereitgestellt wird demnach eine Werkstückbearbeitungsvorrichtung, insbesondere Schleifvorrichtung, mit zumindest einem Spindelmodul und einem Werkzeugwechsler, wobei
- das zumindest eine Spindelmodul angepasst ist, ein Werkzeug, insbesondere Schleifscheibe, zur Bearbeitung eines Werkstückes aufzunehmen,
- das zumindest eine Spindelmodul entlang einer vertikalen Translationsachse verfahrbar an einem Spindelmodulhalter angeordnet ist,
- das zumindest eine Spindelmodul eine Spindel, insbesondere Schleifspindel, zur Aufnahme des Werkzeuges und einen Abrichter aufweist, wobei der Abrichter und die Spindel unabhängig voneinander und relativ zueinander an dem Spindelmodul verfahrbar sind, und
- der Werkzeugwechsler angepasst ist,
   - zumindest ein Werkzeug aus einem Werkzeugmagazin zu entnehmen und an der Spindel zu befestigen, und
   - ein an der Spindel befestigtes Werkzeug aufzunehmen und in dem Werkzeugmagazin abzulegen.

Der Werkzeugwechsler ist vorteilhafter Weise so ausgestaltet, dass er sowohl Werkzeuge als auch Abrichtrollen als auch Kühlmitteldüsen an jedem beliebig Ort im Arbeitsraum der Werkstückbearbeitungsvorrichtung wechseln kann.

Der Werkzeugwechsler kann relativ zum Spindelmodulhalter verfahrbar sein.

In einer vorteilhaften Ausgestaltung der Erfindung kann die Werkstückbearbeitungsvorrichtung zumindest zwei Spindelmodule aufweisen, wobei jedes Spindelmodul angepasst ist, ein Werkzeug, insbesondere Schleifscheibe, zur vorzugsweise gleichzeitigen Bearbeitung eines Werkstückes aufzunehmen. Vorteilhaft ist es hierbei, wenn die Spindelmodule unabhängig voneinander und relativ zueinander entlang der vertikalen Translationsachse verfahrbar an dem Spindelmodulhalter angeordnet sind. Vorteilhaft ist es zudem, wenn jedes Spindelmodul eine Spindel, insbesondere Schleifspindel, zur Aufnahme des Werkzeuges und einen Abrichter aufweist, wobei der Abrichter und die Spindel unabhängig voneinander und relativ zueinander an dem jeweiligen Spindelmodul verfahrbar sind.

Durch das Vorsehen von zwei Spindelmodulen, die jeweils eine Schleifspindel aufweisen und die unabhängig voneinander verfahrbar sind, können zwei Seiten eines Werkstückes, etwa zwei gegenüberliegende Seiten, gleichzeitig bearbeitet werden. Bei der gleichzeitigen Bearbeitung zweier gegenüberliegenden Seiten eines Werkstückes ist zudem gewährleistet, dass sich die Kräfte, mit denen das Werkstück auf beiden Seiten beaufschlagt wird, weitgehend aufheben, sodass das Werkstück während des Schleifvorganges nicht deformiert wird oder das Werkstück einer Spannung ausgesetzt wird, die sich negativ auf die Qualität des Endproduktes auswirkt. Durch die gleichzeitige Bearbeitung von zwei oder mehr Seiten des Werkstückes kann zudem die gesamte Bearbeitungsdauer erheblich reduziert werden.

Durch das Vorsehen eines Abrichters an jedem Spindelmodul kann das Abrichten der Schleifscheibe direkt am Spindelmodul durchgeführt werden, ohne dass die Schleifscheibe hierfür abgenommen werden muss.

In einer besonders vorteilhaften Ausgestaltung der Erfindung kann eine Schleifscheibe auch während eines Schleifvorganges abgerichtet werden, wobei während des Schleifvorganges lediglich berücksichtigt werden muss, dass sich die Geometrie der Schleifscheibe aufgrund des Abrichtens verändert. Verringert sich während des Abrichtens der Durchmesser der Schleifscheibe, so muss die Position der Schleifscheibe relativ zum zu bearbeitenden Werkstück lediglich um einen entsprechenden Wert angepasst werden. Dadurch kann verhindert werden, dass während des Abrichtens die Produktion unterbrochen werden muss.

Alternativ hierzu kann der Abrichter auch an dem Maschinentisch angeordnet sein, um die Genauigkeit zu verbessern.

Durch das Vorsehen des Werkzeugwechslers wird die Bearbeitung eines Werkstückes ebenfalls beschleunigt, insbesondere dann, wenn für die Bearbeitung eines einzelnen Werkstückes mehrere Werkzeuge, etwa unterschiedliche Schleifscheiben, verwendet werden müssen. Gegenüber dem reinen manuellen Wechseln der Werkzeuge bringt der Werkzeugwechsler den Vorteil mit sich, dass der Wechselvorgang an sich wesentlich effizienter durchgeführt werden kann. Zudem kann der Werkzeugwechsler das nächste Werkzeug bereits aus dem Werkzeugmagazin entnehmen und zum Wechseln bereithalten, solange sich das aktuelle Werkzeug noch im Einsatz befindet. Insbesondere wird durch das Vorsehen des Werkzeugwechslers auch die Sicherheit erhöht, weil kein manueller Eingriff mehr notwendig ist. Zudem kann sichergestellt werden, dass die für den jeweiligen Bearbeitungsschritt korrekten Werkzeuge an der jeweiligen Spindel befestigt werden.

Vorteilhaft ist es, wenn jedes Spindelmodul zumindest eine Kühlmitteleinrichtung aufweist, wobei die Kühlmitteleinrichtung unabhängig von der jeweiligen Spindel an dem jeweiligen Spindelmodul vorzugsweise in bis zu zwei Achsen verfahrbar ist.

Damit kann die Position der Kühlmitteleinrichtung, mit der das zu bearbeitende Werkstück bzw. das Werkzeug gekühlt wird, optimal an die Positionen des Werkstückes und/oder des Werkzeuges und an die Geometrie des Werkstückes und/oder des Werkzeuges angepasst werden.

In einer vorteilhaften Ausgestaltung der erfindungsgemäßen Werkstückbearbeitungsvorrichtung können die Spindelmodule unabhängig voneinander entlang einer horizontalen Translationsachse verfahrbar an dem Spindelmodulhalter angeordnet sein. Zusätzlich oder alternativ können auch die Spindeln unabhängig voneinander entlang einer horizontalen Translationsachse relativ zum jeweiligen Spindelmodul verfahrbar sein.

Damit können in vorteilhafter Weise zwei übereinander angeordnete Schleifscheiben hinsichtlich der horizontalen Translationsachse versetzt zueinander angeordnet werden, was insbesondere dann vorteilhaft ist, wenn zwei gegenüberliegende Oberflächen des Werkzeuges unterschiedlich geschliffen werden sollen.

In einer weiteren vorteilhaften Ausgestaltung der erfindungsgemäßen Werkstückbearbeitungsvorrichtung können
- die Spindelmodule unabhängig voneinander um eine Rotationsachse schwenkbar an dem Spindelmodulhalter angeordnet sein, und/oder
- die Spindeln um eine Rotationsachse schwenkbar an dem jeweiligen Spindelmodul angeordnet sein.

Damit können in vorteilhafter Weise die Schleifscheiben in einem bestimmten Winkel zur Oberfläche des Werkstückes angeordnet werden, um beispielsweise an der Oberfläche des Werkzeuges schräge Aussparungen, etwa Hinterschneidungen zu erzeugen. Damit lassen sich auch Werkstücke mit einer komplexen Oberflächengeometrie herstellen.

Die Werkstückbearbeitungsvorrichtung kann ein Maschinenbett aufweisen, wobei an dem Maschinenbett der Spindelmodulhalter angeordnet ist und wobei der Spindelmodulhalter entlang einer Translationsachse relativ zum Maschinenbett verfahrbar ist, vorzugsweise entlang der Längsachse des Maschinenbettes.

An dem Maschinenbett kann ein Tisch angeordnet sein. In einer Ausgestaltung der Erfindung kann der Tisch entlang der Translationsachse, vorzugsweise entlang der Längsachse des Maschinenbettes relativ zum Maschinenbett verfahrbar sein.

An dem Tisch kann eine Werkstückspannvorrichtung mit einer Werkstückaufnahme angeordnet sein. Die Werkstückspannvorrichtung bzw. die Werkstückaufnahme ist so ausgestaltet, dass sie um drei Achsen schwenkbar und/oder rotierbar ist. Damit kann das in der Werkstückaufnahme aufgenommene Werkstück in nahezu jede beliebige Position relativ zu den Schleifscheiben gebracht werden.

In einer vorteilhaften Ausgestaltung ist an dem Tisch zumindest ein Abrichter angeordnet, der auch als Tischabrichter bezeichnet wird.

In einer weiteren vorteilhaften Ausgestaltung der erfindungsgemäßen Werkstückbearbeitungsvorrichtung weist diese zumindest drei Spindelmodule auf, wobei das dritte Spindelmodul so ausgestaltet und an dem Spindelmodulhalter angeordnet sein kann, dass die Längsachse der Spindel des dritten Spindelmoduls in einem vorbestimmten Winkel zu den Längsachsen der beiden ersten Spindeln angeordnet ist.

Damit können mindestens drei Seiten eines Werkstückes gleichzeitig bearbeitet werden. So können beispielsweise mit den ersten beiden Spindelmodulen an zwei gegenüberliegenden Seiten des Werkstückes Längsrillen eingeschliffen werden, während mit dem dritten Spindelmodul an der Stirnfläche des Werkstückes eine Querrille eingeschliffen wird. Damit lässt sich die Bearbeitungsdauer für die Bearbeitung eines Werkstückes nochmal erheblich reduzieren. Zudem können damit Bereiche des Werkstückes bearbeitet werden, die mit den beiden anderen Spindeln nicht zugänglich sind.

Der Werkzeugwechsler kann ein Wechselwerkzeug aufweisen, das um eine Rotationsachse rotierbar an dem Werkzeugwechsler angeordnet ist und das zumindest zwei Werkzeugaufnahmen zur Aufnahme eines Werkzeuges aufweist.

Damit kann mit dem Wechselwerkzeug zunächst ein Werkzeug von der Spindel abgenommen werden und nach einer Rotation des Wechselwerkzeuges um 180° das nächste Werkzeug an der Spindel befestigt werden, ohne dass der Werkzeugwechsler das von der Spindel abgenommene Werkzeug zunächst im Werkzeugmagazin ablegen muss.

In einer vorteilhaften Ausgestaltung der erfindungsgemäßen Werkstückbearbeitungsvorrichtung kann das Wechselwerkzeug doppelt so viele Werkzeugaufnahmen aufweisen, wie Spindeln an dem Spindelmodulhalter angeordnet sind. Beispielsweise kann das Wechselwerkzeug vier Werkzeugaufnahmen aufweisen, wenn an dem Spindelmodulhalter zwei Spindeln angeordnet sind. Dadurch kann der Werkzeugwechsler in einem Schritt zwei Werkzeuge aus dem Werkzeugmagazin entnehmen und diese an den Spindeln anordnen, wobei der Werkzeugwechsler ebenfalls in einem Schritt die aktuell an den beiden Spindeln angeordneten Werkzeuge von den Spindeln abnehmen kann. Dadurch können die Rüstzeiten nochmals erheblich verringert werden.

Vorteilhaft ist es, wenn der Werkzeugwechsler um eine vertikale Rotationsachse rotierbar ist und wenn der Werkzeugwechsler um eine vertikale Translationsachse verfahrbar ist. Dadurch können Werkzeuge sowohl an den Spindelmodulen als auch Werkzeuge, die am Tisch angeordnet sind, etwa der Tischabrichter, gewechselt werden.

Das Werkzeugmagazin kann eine Anzahl von Werkzeugen, insbesondere Schleifscheiben, Abrichter bzw. Abrichtrollen, Messtaster, Schweißeinrichtungen und/oder Kühlmitteldüsen aufnehmen, wobei die Werkzeuge an einer Transporteinrichtung angeordnet sind, mit der ein vorbestimmtes Werkzeug der Anzahl von Werkzeugen in eine Übergabeposition transportierbar ist, in der das vorbestimmte Werkzeug von dem Werkzeugwechsler aus dem Werkzeugmagazin entnommen werden kann.

In einer besonders vorteilhaften Ausgestaltung der erfindungsgemäßen Werkstückbearbeitungsvorrichtung sind die Spindelmodule identisch aufgebaut.

Vorzugsweise sind die Spindelmodule lösbar an dem Spindelmodulhalter angeordnet.

Damit wird eine höchstmögliche Flexibilität hinsichtlich der Anzahl der Schleifspindeln erreicht. Insbesondere können je nach Bedarf oder Kundenanforderung an der Werkstückbearbeitungsvorrichtung unterschiedlich viele Spindelmodule angeordnet werden. Aufgrund der identischen Ausgestaltung der einzelnen Spindelmodule können der Konstruktionsaufwand und die Herstellungskosten erheblich reduziert werden.

Bereitgestellt wird durch die Erfindung zudem ein Spindelmodul für eine Werkstückbearbeitungsvorrichtung, insbesondere für eine Schleifvorrichtung, wobei das Spindelmodul eine Spindel, insbesondere Schleifspindel, zur Aufnahme eines Werkzeuges, insbesondere Schleifscheibe, zumindest einen Abrichter und zumindest eine Kühlmitteleinrichtung aufweist, wobei der Abrichter, die Spindel und die Kühlmitteleinrichtung unabhängig voneinander und relativ zueinander verfahrbar sind.

Vorteilhaft ist es, wenn die Spindel um eine Achse schwenkbar an dem Spindelmodul angeordnet ist.

Mit der erfindungsgemäßen Werkstückbearbeitungsvorrichtung wird eine maximale Flexibilität hinsichtlich der Spindeln und der Peripherieelemente, etwa Abrichter und Spüleinrichtungen, erreicht. Die Anzahl der Spindeln bzw. Schleifspindeln kann flexibel festgelegt werden und je nach Bedarf angepasst werden. Die Produktivität kann erheblich gesteigert werden, weil Rüstzeiten erheblich reduziert werden können und die Werkzeuge flexibel an den jeweiligen Bedarf angepasst werden können, wobei mit mehreren Spindeln eine gleichzeitige Bearbeitung mehrerer Oberflächen des Werkstückes möglich ist, sodass auch die reine Bearbeitungsdauer eines Werkstückes erheblich reduziert werden kann.

Weiterhin ist die erfindungsgemäße Werkstückbearbeitungsvorrichtung so ausgestaltet, dass sie automatisch beladen werden kann und damit in eine komplett mannlose Fertigung integriert werden kann.

### Kurzbeschreibung der Figuren

Weitere Einzelheiten und Merkmale der Erfindung sowie konkrete, insbesondere vorteilhafte Ausführungen der Erfindung ergeben sich aus der nachfolgenden Beschreibung in Verbindung mit der Zeichnung. Es zeigt:
- Fig. 1: eine erfindungsgemäße Werkstückbearbeitungsvorrichtung in einer perspektivischen Ansicht;
- Fig. 2: eine perspektivische Ansicht eines Werkzeugwechslers der erfindungsgemäßen Werkstückbearbeitungsvorrichtung;
- Fig. 3: ein Spindelmodul in einer perspektivischen Ansicht einer erfindungsgemäßen Werkstückbearbeitungsvorrichtung; und
- Fig. 4: zwei Beispiele eines Werkstückes mit relativ zu dem jeweiligen Werkstück angeordneten Schleifspindeln bzw. Werkzeugen.

### Detaillierte Beschreibung der Erfindung

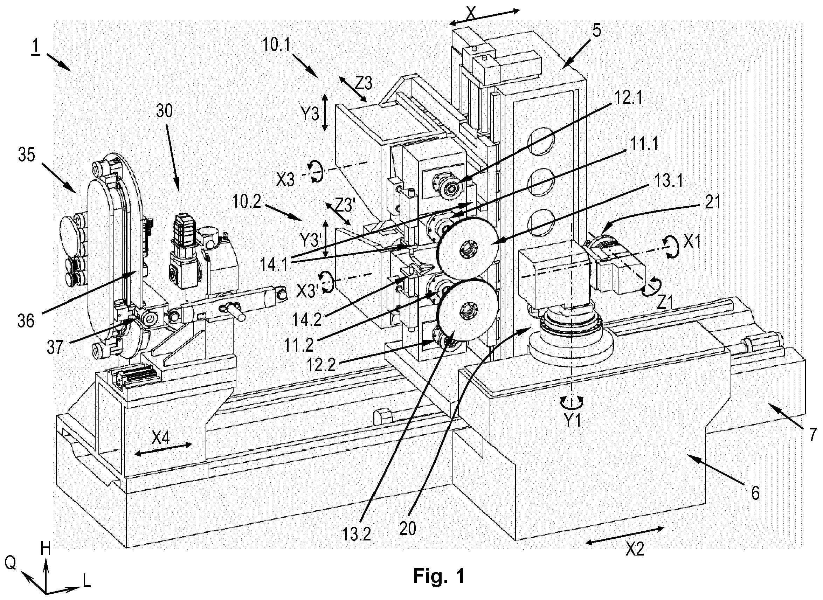

**Fig. 1** zeigt eine erfindungsgemäße Werkstückbearbeitungsvorrichtung 1 in einer perspektivischen Ansicht, wobei die Werkstückbearbeitungsvorrichtung 1 hier als Schleifvorrichtung ausgestaltet ist.

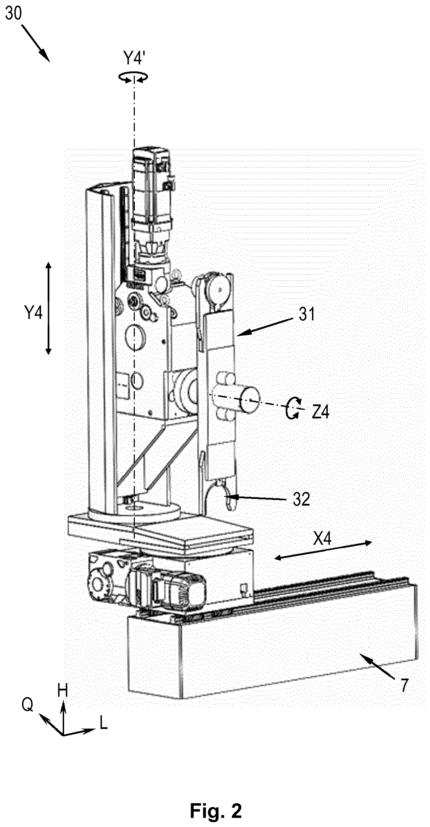

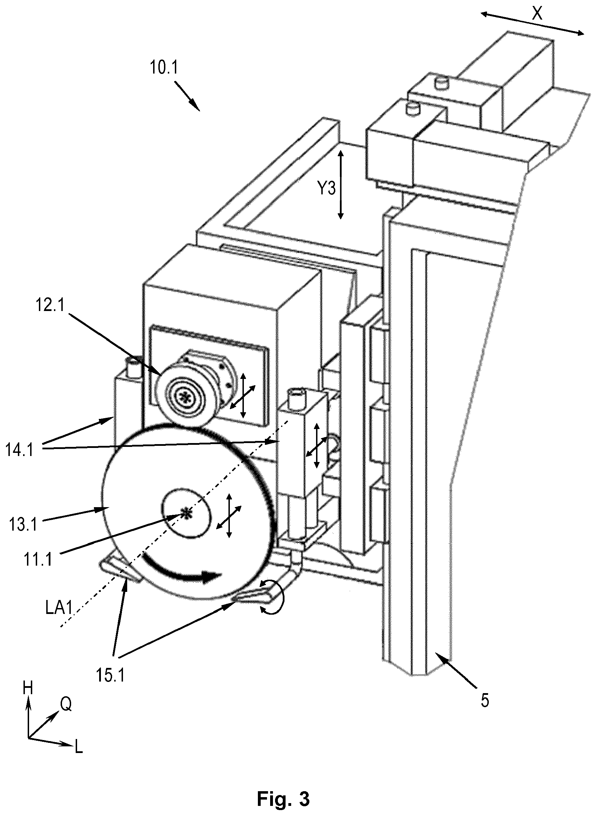

Ferner ist in Fig. 1 sowie in den nachfolgenden Figuren 2 und 3 jeweils ein Bezugskoordinatensystem mit der Längsachse L, der Querachse Q und der Hochachse H angegeben, wobei diese drei Achsen zur Bezeichnung der Hauptrichtungen bzw. Hauptachsen X, Y und Z der Schleifvorrichtung 1 verwendet werden. Die drei Achsen L, Q und H des Bezugskoordinatensystems stehen senkrecht zueinander.

Mit X werden die Achsen der Schleifvorrichtung 1 bezeichnet, die parallel zur Längsachse L verlaufen. Mit Z wird regelmäßig eine Achse bezeichnet, die im Wesentlichen parallel zur Querachse Q verläuft. Mit Y wird ferner regelmäßig eine Achse der Schleifvorrichtung bezeichnet, die im Wesentlichen parallel zur Hochachse H verläuft.

An einem Maschinenbett 7 der Schleifvorrichtung sind ein Tisch bzw. Maschinentisch 6, ein Spindelmodulhalter 5 und ein Werkzeugwechsler 30 angeordnet, wobei sowohl der Spindelmodulhalter 5 als auch der Werkzeugwechsler 30 entlang der Translationsachsen X und X4 parallel zur Längsachse L des Maschinenbettes 7 verfahrbar sind. Optional kann auch der Tisch 6 entlang der Translationsachse X2 verfahrbar sein. In einer Ausgestaltung der Erfindung ist es jedoch vorgesehen, den Tisch 6 fest an dem Maschinenbett 7 anzuordnen.

Zum Verfahren des Spindelmodulhalters, des Tisches und des Werkzeugwechslers sind in bzw. an dem Maschinenbett 7 Führungen vorgesehen. Zum Bewegen dieser drei Einheiten können elektrische oder mechanische Vorschubmittel vorgesehen sein, wobei der Spindelmodulhalter 5, der Tisch 6 und der Werkzeugwechsler 30 unabhängig voneinander bewegbar sind.

An dem Tisch 6, der entlang der Translationsachse X2 verfahrbar sein kann, ist eine Werkstückspannvorrichtung 20 angeordnet, die eine Werkstückaufnahme 21 zur Aufnahme des Werkstückes aufweist. Die Werkstückaufnahme 21 kann beispielsweise als Spannfutter ausgestaltet sein.

Die Werkstückspannvorrichtung 20 ist um die drei Rotationsachsen X1, Y1 und Z1 drehbar bzw. schwenkbar, sodass das in der Werkstückaufnahme 21 aufgenommene Werkstück in nahezu jeder beliebigen Ausrichtung dem Werkzeug der Schleifvorrichtung zugeführt werden kann. Für das Drehen bzw. Schwenken der Werkstückspannvorrichtung 20 um die drei Achsen X1, Y1 und Z1 können beispielsweise Elektromotoren vorgesehen sein, mit denen vorzugsweise ein stufenloses Drehen bzw. Schwenken ermöglicht wird. Ferner kann jede Drehachse der Werkstückspannvorrichtung 20 geklemmt werden, etwa hydraulisch, um eine möglichst stabile Bearbeitungsposition zu gewährleisten.

An dem Tisch 6 kann zudem ein in Fig. 1 nicht gezeigter Abrichter bzw. eine Abrichtscheibe angeordnet sein. Dieser Abrichter kann vorteilhafter Weise zwei Abrichtscheiben aufweisen, um beide Schleifscheiben der Spindeln 11.1 und 11.2 abzurichten.

Der Spindelmodulhalter 5 ist vorzugsweise stufenlos entlang der Translationsachse X bewegbar, sodass ein stufenloses Anordnen der Werkzeuge relativ zum Werkstück bezüglich der Translationsachse X gewährleistet werden kann. An dem Spindelmodulhalter sind hier zwei Spindelmodule, nämlich ein erstes Spindelmodul 10.1 und ein zweites Spindelmodul 10.2 angeordnet. Beide Spindelmodule sind so an dem Spindelmodulhalter 5 angeordnet, dass sie unabhängig voneinander entlang der Translationsachsen Y3 und Y3' parallel zur Hochachse H bewegt werden können. Die beiden Spindelmodule sind hierbei an einer entsprechenden Schlittenführung des Spindelmodulhalters 5 angeordnet.

Die beiden Spindelmodule 10.1, 10.2 weisen hier jeweils eine Schleifspindel 11.1, 11.2, einen Abrichter 12.1, 12.2 und eine Kühlmitteleinrichtung 14.1, 14.2 auf. An den beiden Schleifspindeln 11.1, 11.2 ist hier jeweils eine Schleifscheibe 13.1, 13.2 als Werkzeug befestigt. Die Werkzeuge 13.1, 13.2 sind hierbei lösbar an der jeweiligen Schleifspindel befestigt, sodass sie mit dem Werkzeugwechsler maschinell gewechselt werden können.

Der Aufbau bzw. die Funktionsweise des ersten Spindelmoduls 10.1 ist weitgehend identisch mit dem Aufbau bzw. der Funktionsweise des zweiten Spindelmoduls 10.2, sodass im Folgenden lediglich das erste Spindelmodul 10.1 näher beschrieben wird. "Identisch" bedeutet in diesem Zusammenhang, dass die beiden Spindelmodule 10.1 und 10.2 auch symmetrisch zueinander aufgebaut sein können.

Das Spindelmodul 10.1 kann so mittels einer Halterung an den Spindelmodulhalter 5 angeordnet sein, dass das gesamte Spindelmodul 10.1 um eine parallel zur Längsachse L verlaufende Rotationsachse X3 drehbar bzw. schwenkbar an dem Spindelmodulhalter 5 angeordnet ist.

Alternativ oder zusätzlich hierzu kann auch die Schleifspindel 11.1 um eine Rotationsachse, die parallel zur Längsachse L verläuft, relativ zum Spindelmodul 10.1 geschwenkt bzw. gedreht werden. Dadurch kann die Schleifscheibe 13.1 schräg an dem Werkstück angesetzt werden, um beispielsweise schräge Aussparungen bzw. Hinterschneidungen an der Oberfläche des Werkstückes zu erzeugen.

Darüber hinaus ist das erste Spindelmodul 10.1 entlang der Translationsachse Z3, die parallel zur Querachse Q verläuft, relativ zum Spindelmodulhalter verfahrbar. Alternativ oder zusätzlich hierzu kann auch die Schleifspindel 11.1 entlang der Translationsachse Z3 relativ zum Spindelmodul 10.1 verfahrbar sein. Dies bringt mehrere Vorteile mit sich. Zum einen kann das Werkzeug 13.1 hinsichtlich der Translationsachse Z3 versetzt zum Werkzeug 13.2 des zweiten Spindelmoduls 10.2 angeordnet werden, sodass, gegebenenfalls auch in Kombination mit der schwenkbaren Anordnung der Schleifspindeln, zwei Seiten eines Werkstückes unterschiedlich bearbeitet werden können. Zudem kann die Schleifspindel hinsichtlich der Translationsachse Z3 so relativ zum Abrichter 12.1 angeordnet werden, dass beispielsweise sowohl ein Abrichten der Vorderseite als auch ein Abrichten der Rückseite der Schleifscheibe 13.1 ermöglicht wird, ohne dass der Abrichter 12.1 entlang der Translationsachse Z3 bewegt werden müsste.

Vorteilhaft ist es allerdings, wenn auch der Abrichter 12.1 entlang der Translationsachse Z3 bewegbar an dem Spindelmodul 10.1 angeordnet ist. Weiter vorteilhaft ist es, wenn der Abrichter 12.1 auch entlang der vertikalen Translationsachse Y3 relativ zum Spindelmodul 10.1 bewegbar ist. Damit kann der Abrichter 12.1 bzw. die Abrichtscheibe auch während eines Schleifvorganges der Schleifscheibe zugeführt werden, um beispielsweise während eines Schleifvorganges die Schleifscheibe 13.1 abzurichten. Dadurch können Stillstandzeiten, die ansonsten während des Abrichtens notwendig werden, weitgehend entfallen. Weil ein Abrichten der Schleifscheibe meist mit einer Verringerung des Durchmessers der Schleifscheibe einhergeht, kann es hierbei notwendig sein, die vertikale Position der Schleifspindel 11.1 relativ zum Werkstück während des Abrichtens anzupassen. Dies ist aufgrund der vertikalen Verfahrbarkeit des Spindelmoduls und/oder der Schleifspindel jederzeit möglich.

Der Durchmesser der an der Schleifspindel 11.1 angeordneten Schleifscheibe 13.1 kann im Betrieb mit Hilfe eines Sensors erfasst werden, der vorzugsweise fest an der Schleifspindel 11.1 angeordnet ist und zusammen mit der Schleifspindel bewegt wird. Damit kann einerseits der Durchmesser der Schleifscheibe während eines Abrichtvorganges ermittelt werden. Andererseits kann der Durchmesser der Schleifscheibe auch während eines Schleifvorganges, bei dem kein Abrichten durchgeführt wird, fortlaufend überwacht werden, sodass auch eine Verringerung des Durchmessers der Schleifscheibe, die sich aufgrund des Schleifvorganges ergibt, detektiert werden kann und auch hierbei die Position der Schleifscheibe relativ zum Werkstück gegebenenfalls korrigiert werden kann. Während es im Stand der Technik üblich ist, die Position der Schleifscheibe relativ zum Werkstück aufgrund von Erfahrungswerten für das Abnutzungsverhalten der Schleifscheibe zu korrigieren, können bei Vorsehen eines entsprechenden Sensors weitaus geringere Toleranzen bei der Oberflächenbearbeitung eines Werkstückes eingehalten werden.

Ferner ist an dem Spindelmodul 10.1 eine Kühlmitteleinrichtung 14.1 angeordnet, die eine Kühlmittelzufuhr und eine Kühlmitteldüse 15.1 aufweist. Die Kühlmitteleinrichtung ist vorteilhafterweise ebenfalls entlang den Translationsachsen Y3 und Z3 relativ zum Spindelmodul verfahrbar, sodass die Kühlmitteldüse 15.1 optimal relativ zur Schleifscheibe und/oder zum zu bearbeitenden Werkstück angeordnet werden kann. In einer vorteilhaften Ausgestaltung der Erfindung sind an dem Spindelmodul zwei Kühlmitteleinrichtungen vorgesehen, wobei eine Kühlmitteleinrichtung links von der Schleifspindel und die andere Kühlmitteleinrichtung rechts von der Schleifspindel angeordnet sind.

Vorteilhaft ist es zudem, wenn die Kühlmitteldüsen lösbar an der Kühlmitteleinrichtung angeordnet sind, sodass auch diese mit Hilfe des Werkzeugwechslers 30 ausgewechselt werden können. Damit können Kühlmitteldüsen mit unterschiedlichen Fluidaustrittsquerschnitten an dem Spindelmodul befestigt werden und so beispielsweise optimal an die Stärke bzw. Dicke der Schleifscheibe angepasst werden. Zudem kann so der Verbrauch an Kühlmittel optimiert werden.

Sowohl die Schleifscheibe 13.1 als auch der Abrichter 12.1 bzw. die Abrichtscheibe und die Kühlmitteldüse 15.1 sind lösbar an dem Spindelmodul angeordnet und können mit Hilfe des Werkzeugwechslers 30 von dem Spindelmodul abgenommen werden und durch neue bzw. andere Schleifscheiben, Abrichtscheiben bzw. Kühlmitteldüsen ersetzt werden.

Hierzu ist bei der erfindungsgemäßen Werkstückbearbeitungsvorrichtung 1 ein Werkzeugmagazin 35 vorgesehen, in welchem eine Anzahl von Werkzeugen, insbesondere Schleifscheiben, Abrichter bzw. Abrichtrollen, Messtaster, Schweißeinrichtungen und/oder Kühlmitteldüsen aufgenommen sind, und die von dem Werkzeugwechsler 30 aus dem Werkzeugmagazin 35 entnommen werden können. Das Werkzeugmagazin 35 weist eine Transporteinrichtung 36 auf, die beispielsweise nach der Art eines Förderbandes ausgestaltet sein kann. Mit Hilfe dieser Transporteinrichtung 36 kann das benötigte Werkzeug zu einer Übergabeposition 37 gebracht werden, in der der Werkzeugwechsler 30 das Werkzeug aufnehmen und aus dem Werkzeugmagazin entnehmen kann.

Zudem kann der Werkzeugwechsler 30 das von dem Spindelmodul abgenommene Werkzeug in dem Werkzeugmagazin 35 ablegen, wobei hierbei ein leerer Aufnahmeplatz der Transporteinrichtung 36 in die Übergabeposition 37 gebracht wird, damit der Werkzeugwechsler 30 das Werkzeug an die Transporteinrichtung 36 übergeben kann.

Das Vorsehen eines Werkzeugwechslers 30 hat den Vorteil, dass kein manueller Eingriff in die Schleifvorrichtung zum Wechseln eines Werkzeuges nötig ist, sodass einerseits das Verletzungsrisiko weitestgehend ausgeschaltet wird und andererseits verhindert wird, dass fälschlicherweise ein falsches Werkzeug an dem Spindelmodul angeordnet wird.

Um auch beim automatischen Wechseln der Werkzeuge mit Hilfe des Werkzeugwechslers 30 zu gewährleisten, dass kein falsches Werkzeug an dem jeweiligen Spindelmodul angeordnet wird, kann es vorteilhaft sein, wenn die in dem Werkzeugmagazin 35 aufgenommenen Werkzeuge mit einer eindeutigen Kennung, etwa ein sogenanntes RFID-Tag, versehen werden. Eine solche Kennung kann mit Hilfe eines Lesegerätes ausgelesen werden, wobei ein solches Lesegerät an der Übergabeposition 37 des Werkzeugmagazins, an dem Werkzeugwechsler 30 und/oder an dem jeweiligen Spindelmodul angeordnet sein kann. Damit kann überprüft werden, ob das korrekte, vom Schleifprogramm vorgesehene Werkzeug zum Wechseln aus dem Werkzeugmagazin entnommen wird. Wird beispielsweise das Werkzeugmagazin 35 falsch beladen, kann so frühzeitig erkannt werden, dass das benötigte Werkzeug nicht in dem Werkzeugmagazin vorhanden ist oder dass das an der Übergabeposition bereitgestellte Werkzeug nicht dem benötigten Werkzeug entspricht. Dadurch wird vermieden, dass das Werkstück mit falschen Werkzeugen bearbeitet wird, was zu einem unnötigen Ausschuss führen kann.

Die Werkzeuge selbst, d.h. die Schleifscheiben, die Abrichtrollen, die Messtaster, die Schweißeinrichtungen und/oder Kühlmitteldüsen können jeweils einen Hohlschaftkegel (HSK) aufweisen, mit dem das jeweilige Werkzeug an dem Spindelmodul bzw. an der Transporteinrichtung 36 des Werkzeugmagazins lösbar befestigt wird.

**Fig. 2** zeigt eine perspektivische Ansicht eines Werkzeugwechslers 30 der erfindungsgemäßen Werkstückbearbeitungsvorrichtung.

Der Werkzeugwechsler 30 ist entlang der Translationsachse X4 an dem Maschinenbett 7 bewegbar. Zudem ist der Werkzeugwechsler 30 entlang einer vertikalen Translationsachse Y4 bewegbar.

Der Werkzeugwechsler 30 weist ein Wechselwerkzeug 31 auf, das um eine horizontale Rotationsachse Z4 rotierbar an dem Werkzeugwechsler 30 angeordnet ist. Das Wechselwerkzeug 31 ist hinsichtlich der Rotationsachse Z4 symmetrisch ausgestaltet, wobei an den beiden Enden des Wechselwerkzeuges 31 jeweils eine Werkzeugaufnahme 32 ausgebildet ist, mit denen die Werkzeuge aufgenommen werden.

Mit dem in Fig. 2 gezeigten Werkzeugwechsler, dessen Wechselwerkzeug 31 zwei Werkzeugaufnahmen 32 aufweist, kann ein Werkzeug aus dem Werkzeugmagazin entnommen werden. Der Werkzeugwechsler 30 wird nach Entnahme des Werkzeuges aus dem Werkzeugmagazin entlang der Achse X4 in Richtung der Spindelmodule verfahren. Das Spindelmodul, an dem ein Werkzeug ausgewechselt werden soll, wird dann in eine Position gebracht, in der mit der freien Werkzeugaufnahme 32 des Wechselwerkzeuges 31 das gewünschte Werkzeug von dem Spindelmodul abgenommen werden kann. Nach der Abnahme des Werkzeuges von dem Spindelmodul mit der freien Werkzeugaufnahme 32 wird das Wechselwerkzeug 31 um 180° rotiert, sodass das aus dem Werkzeugmagazin entnommene Werkzeug an dem Spindelmodul befestigt werden kann. Hierzu kann der Werkzeugwechsler 30 oder alternativ das Wechselwerkzeug 31 auch um eine horizontale Achse, die parallel zur Querachse Q verläuft, verfahrbar sein.

In einer einfachen Ausgestaltung kann der Werkzeugwechsler 30 so ausgestaltet sein, dass damit lediglich Werkzeuge, beispielsweise die Schleifscheibe, die Abrichtrolle und/oder die Kühlmitteldüse, an den Spindelmodulen ausgewechselt werden können.

Es ist allerdings von Vorteil, wenn mit dem Werkzeugwechsler 30 auch Werkzeuge gewechselt werden können, die beispielsweise am Tisch 6 angeordnet sind, etwa ein am Werkzeugschlitten angeordneter Tischabrichter. Hierzu ist es vorgesehen, dass der Werkzeugwechsler 30 um eine vertikale Rotationsachse Y4' rotierbar ist, vorzugsweise um mindestens 180°. Dadurch kann das Wechselwerkzeug 31 bei Bedarf entweder zum Spindelmodul oder zum Tisch hin ausgerichtet werden.

Zwischen einer Basisplatte des Werkzeugwechslers und der Antriebseinheit auf dem Maschinenbett 7 kann gegebenenfalls ein Distanzelement angeordnet werden, um die Höhe des Werkzeugwechslers 30 anpassen zu können, sofern beispielsweise das obere Spindelmodul aufgrund eines begrenzten Verfahrweges entlang der vertikalen Translationsachse Y4 nicht bedient werden kann.

In einer vorteilhaften Ausgestaltung ist es vorgesehen, dass der Werkzeugwechsler 30 ein Wechselwerkzeug 31 aufweist, das vier oder sechs Werkzeugaufnahmen 32 aufweist. Mit vier Werkzeugaufnahmen 32 können zwei Werkzeuge gleichzeitig gewechselt werden, mit sechs Werkzeugaufnahmen 32 können drei Werkzeuge gleichzeitig gewechselt werden.

So ist es beispielsweise vorteilhaft, wenn bei einer Schleifvorrichtung 1 mit zwei Spindelmodulen ein Wechselwerkzeug 31 mit vier Werkzeugaufnahmen 32 vorgesehen wird. Damit können dann beispielsweise zwei Schleifscheiben aus dem Werkzeugmagazin entnommen werden und in Richtung der Spindelmodule verfahren werden. Mit den beiden freien Werkzeugaufnahmen 32 des Wechselwerkzeuges 31 können dann von den beiden Spindelmodulen die beiden Schleifscheiben abgenommen werden und durch die beiden aus dem Werkzeugmagazin entnommenen Schleifscheiben ersetzt werden. Es können also in einem Schritt mehrere Werkzeuge ausgetauscht werden, sodass die Rüstzeiten erheblich reduziert werden können.

Besonders vorteilhaft ist das Wechselwerkzeug 31 mit vier Werkzeugaufnahmen 32, wenn damit die Schleifscheibe und die Abrichtrolle eines Spindelmoduls gleichzeitig gewechselt werden.

**Fig. 3** zeigt ein Spindelmodul 10.1 einer erfindungsgemäßen Werkstückbearbeitungsvorrichtung in einer perspektivischen Ansicht.

Wie anhand der Doppelpfeile kenntlich gemacht, sind gemäß der in Fig. 3 gezeigten Ausführungsform eines Spindelmoduls 10.1 die Schleifspindel 11.1, der Abrichter 12.1 und die Kühlmitteleinrichtungen 14.1, 14.2 sowohl in horizontaler Richtung parallel zur Querachse Q und in vertikaler Richtung parallel zur Hochachse H unabhängig voneinander verfahrbar. Damit können sämtliche Einheiten des Spindelmoduls 10.1, d.h. die Schleifspindel 11.1, der Abrichter 12.1 und die Kühlmitteleinrichtungen 14.1, 14.2 jedenfalls entlang der Querachse Q und entlang der Hochachse H relativ zueinander verfahren werden. Damit kann beispielsweise die Schleifscheibe 13.1 zum Zwecke des Abrichtens an den Abrichter 12.1 herangeführt werden. Zudem können die Kühlmitteleinrichtungen 14.1, 14.2 so relativ zur Schleifscheibe 13.1 bzw. zum Werkstück angeordnet werden, dass ein optimales Kühlergebnis gewährleistet ist.

Die Kühlmitteldüsen 15.1, 15.2 können zudem um eine Längsachse schwenkbar angeordnet sein, um beispielsweise auch den Austrittswinkel des Kühlmittels optimal ausrichten zu können.

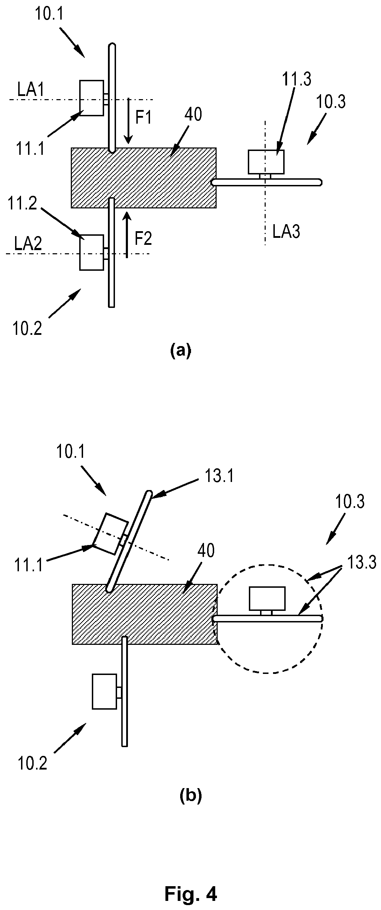

**Fig. 4** zeigt zwei Beispiele eines Werkstückes mit relativ zu dem jeweiligen Werkstück angeordneten Schleifspindeln bzw. Werkzeugen.

In Abbildung (a) sind das erste Spindelmodul 10.1 und das zweite Spindelmodul 10.2 so angeordnet, dass ihre Längsachsen LA1 und LA2 parallel zueinander verlaufen und die jeweilige Schleifscheibe im Wesentlichen senkrecht an der Oberfläche des Werkstückes 40 aufliegt. Die auf die Oberseite des Werkstückes 40 wirkende Kraft F1 und die auf die Unterseite des Werkstückes wirkende Kraft F2 heben sich dabei im Wesentlichen auf, sodass das Werkstück 40 nicht verformt wird bzw. keiner von außen wirkenden Spannung ausgesetzt ist, was sich negativ auf die Produkt- bzw. Materialeigenschaften auswirken kann.

Das dritte Spindelmodul 10.3 ist so an dem Werkstück 40 angeordnet, dass die Längsachse LA3 der dritten Schleifspindel 11.2 im Wesentlichen senkrecht zu den Längsachsen LA1, LA2 der ersten Schleifspindel 11.1 und der zweiten Schleifspindel 11.2 steht. Zudem ist das dritte Spindelmodul 10.3 an einer Stirnseite des Werkstückes 40 angeordnet, die zwischen der Oberseite und der Unterseite des Werkstückes verläuft. Dadurch, dass sich die beiden Kräfte F1 und F2 im Wesentlichen gegenseitig aufheben und das Werkstück 40 dadurch nicht gekrümmt wird, ist zudem gewährleistet, dass auch an der Stirnseite des Werkstückes 40 die gewünschte Oberflächengeometrie mit Hilfe des dritten Spindelmoduls 10.3 korrekt hergestellt werden kann.

In Abbildung (b) sind die drei Spindelmodule 10.1, 10.2 und 10.3 an den gleichen Oberflächen angeordnet, wie in Abbildung (a) gezeigt. Im Unterschied zur Abbildung (a) ist das erste Spindelmodul 10.1 bzw. die erste Schleifspindel 11.1 um einen bestimmten Winkel geneigt, sodass mit Hilfe der ersten Schleifscheibe 13.1 eine schräge Aussparung bzw. eine Hinterschneidung an der Oberseite des Werkstückes 40 hergestellt werden kann.

Auch bei der in Abbildung (b) gezeigten Anordnung der Spindelmodule 10.1 und 10.2 heben sich die auf das Werkstück 40 wirkenden Kräfte im Wesentlichen auf.

In den beiden Abbildungen (a) und (b) ist das dritte Spindelmodul 10.3 bzw. die dritte Schleifspindel 11.3 so an dem Werkstück 40 angeordnet, dass mit der Schleifscheibe eine an der Stirnseite des Werkstückes quer verlaufende Vertiefung erzeugt werden kann. Das dritte Spindelmodul 10.3 bzw. die Schleifspindel 11.3 kann aber auch um 90° gedreht an der Stirnseite des Werkstückes angeordnet sein, sodass an der Stirnseite des Werkstückes eine im Wesentlichen vertikal verlaufende Vertiefung erzeugt werden kann. Diese um 90° gedrehte Anordnung ist in Abbildung (b) durch die strichlierte Darstellung der Schleifscheibe 13.3 verdeutlicht.

Mit der erfindungsgemäßen Werkstückbearbeitungsvorrichtung wird ein modulares Maschinenkonzept zur Verfügung gestellt, mit dem eine besonders flexible Bearbeitung von Werkstücken ermöglicht wird, indem beispielsweise die Anzahl der Spindelmodule bzw. der Schleifspindeln flexibel an die jeweiligen Anforderungen angepasst werden kann. So können je nach zu bearbeitendem Werkstück eine Schleifspindel, zwei Schleifspindeln oder auch drei Schleifspindeln vorgesehen bzw. verwendet werden.

Weil an jedem Spindelmodul ein Abrichter vorgesehen ist, kann auch bei mehreren Spindelmodulen ein effizientes Abrichten der Schleifscheiben durchgeführt werden, ohne dass es zu längeren Ausfallzeiten bzw. Stillstandzeiten aufgrund des Abrichtens kommt.

Durch die Möglichkeit, sowohl die Werkzeuge als auch die Abrichter und die Kühlmitteleinrichtungen bzw. die Kühlmitteldüsen mit Hilfe des Werkzeugwechslers automatisch wechseln zu können, werden einerseits die Rüstzeiten erheblich verringert. Anderseits wird die Sicherheit erhöht, weil kein manueller Eingriff mehr notwendig ist. Zudem wird die Sicherheit auch in jener Hinsicht erhöht, dass durch entsprechende Vorkehrungen, etwa durch an den Werkzeugen angeordnete RFID-Tags, weitgehend ausgeschlossen werden kann, dass die Spindelmodule mit falschen Werkzeugen bestückt werden.

Durch die besondere Ausgestaltung des Werkzeugwechslers können zudem sowohl Werkzeuge an den Spindelmodulen als auch Werkzeuge an dem Tisch automatisch gewechselt werden.

Durch die zweiachsige Verfahrbarkeit der Kühlmitteleinrichtungen und gegebenenfalls durch die Schwenkbarkeit der Kühlmitteldüsen ist die Beaufschlagung des Kühlmittels optimal an die Geometrie des Werkstückes und an die Geometrie der Werkzeuge anpassbar, sodass ein optimales Schleifergebnis realisiert werden kann.

### Bezugszeichen:

- 1: Werkstückbearbeitungsvorrichtung, z.B. Schleifvorrichtung
- 5: Spindelmodulhalter
- 6: Tisch
- 7: Maschinenbett
- 10.1: erstes Spindelmodul
- 10.2: zweites Spindelmodul
- 10.3: drittes Spindelmodul
- 11.1: Schleifspindel des ersten Spindelmoduls 10.1
- 11.2: Schleifspindel des zweiten Spindelmoduls 10.2
- 11.3: Schleifspindel des dritten Spindelmoduls 10.3
- 12.1: Abrichter des ersten Spindelmoduls 10.1
- 12.2: Abrichter des zweiten Spindelmoduls 10.2
- 13.1: Werkzeug, z.B. Schleifscheibe, des ersten Spindelmoduls 10.1
- 13.2: Werkzeug, z.B. Schleifscheibe, des zweiten Spindelmoduls 10.2
- 14.1: Kühlmitteleinrichtung mit Kühlmitteldüsen des ersten Spindelmoduls 10.1
- 14.2: Kühlmitteleinrichtung mit Kühlmitteldüsen des zweiten Spindelmoduls 10.2
- 15.1: Kühlmitteldüsen der ersten Kühlmitteleinrichtung 14.1
- 15.2: Kühlmitteldüsen der zweiten Kühlmitteleinrichtung 14.2
- 20: Werkstückspannvorrichtung
- 21: Werkstückaufnahme, z.B. Spannfutter
- 30: Werkzeugwechsler
- 31: Wechselwerkzeug
- 32: Werkzeugaufnahme des Wechselwerkzeuges 31
- 35: Werkzeugmagazin
- 36: Transporteinrichtung des Werkzeugmagazins 35
- 37: Übergabeposition
- 40: Werkstück
- F1, F2: auf das Werkstück 40 wirkende Kräfte

- Achsen der: Werkstückbearbeitungsvorrichtung 10
- X: Translationsachse des Spindelmodulhalters 5
- X1, Y1, Z1: Rotationsachsen der Werkstückspannvorrichtung 20
- X2: Translationsachse der Werkstückspannvorrichtung 20
- X3: Rotationsachse des ersten Spindelmoduls 10.1
- X3': Rotationsachse des zweiten Spindelmoduls 10.2
- X4, Y4: Translationsachsen des Werkzeugwechsler 30
- Y3, Z3: Translationsachsen des ersten Spindelmoduls 10.1
- Y3', Z3': Translationsachsen des zweiten Spindelmoduls 10.2
- Z4, Y4': Rotationsachsen des Werkzeugwechsler 30

### Bezugskoordinatensystem

- L: Längsachse (X-Achsen)
- Q: Querachse (Y-Achsen)
- H: Hochachse (Z-Achsen)

## Patentansprüche

1. Werkstückbearbeitungsvorrichtung (1), insbesondere Schleifvorrichtung, mit zumindest einem Spindelmodul (10.1) und einem Werkzeugwechsler (30), wobei
- das Spindelmodul angepasst ist, ein Werkzeug (13.1), insbesondere Schleifscheibe, zur Bearbeitung eines Werkstückes (40) aufzunehmen,
- das Spindelmodul entlang einer vertikalen Translationsachse (Y3) verfahrbar an einem Spindelmodulhalter (5) angeordnet ist,
- wobei das Spindelmodul (10.1) eine Spindel (11.1), insbesondere Schleifspindel, zur Aufnahme des Werkzeuges und einen Abrichter (12.1) aufweist, wobei der Abrichter und die Spindel unabhängig voneinander und relativ zueinander an dem Spindelmodul (10.1) verfahrbar sind, und
- der Werkzeugwechsler (30) angepasst ist
- zumindest ein Werkzeug aus einem Werkzeugmagazin (35) zu entnehmen und an einer Spindel (11.1, 11.2) zu befestigen und
- ein an einer Spindel befestigtes Werkzeug aufzunehmen und in dem Werkzeugmagazin abzulegen.

2. Werkstückbearbeitungsvorrichtung nach dem vorhergehenden Anspruch, wobei diese zumindest zwei Spindelmodule (10.1, 10.2) aufweist, wobei jedes Spindelmodul (10.1, 10.2) angepasst ist, ein Werkzeug (13.1, 13.2), insbesondere Schleifscheibe, zur gleichzeitigen Bearbeitung des Werkstückes (40) aufzunehmen, wobei die Spindelmodule unabhängig voneinander und relativ zueinander entlang der vertikalen Translationsachse (Y3, Y3') verfahrbar an dem Spindelmodulhalter (5) angeordnet sind, und wobei jedes Spindelmodul (10.1, 10.2) eine Spindel (11.1, 11.2), insbesondere Schleifspindel, zur Aufnahme des Werkzeuges und einen Abrichter (12.1, 12.2) aufweist, wobei der Abrichter und die Spindel unabhängig voneinander und relativ zueinander an dem jeweiligen Spindelmodul (10.1, 10.2) verfahrbar sind.

3. Werkstückbearbeitungsvorrichtung nach einem der vorhergehenden Ansprüche, wobei der Werkzeugwechsler (30) relativ zum Spindelmodulhalter (5) verfahrbar ist.

4. Werkstückbearbeitungsvorrichtung nach einem der beiden vorhergehenden Ansprüche, wobeijedes Spindelmodul (10.1, 10.2) zumindest eine Kühlmitteleinrichtung (14.1, 14.2) aufweist, wobei die Kühlmitteleinrichtung unabhängig von der jeweiligen Spindel an dem jeweiligen Spindelmodul verfahrbar ist.

5. Werkstückbearbeitungsvorrichtung nach einem der vorhergehenden Ansprüche 2 bis 4, wobei die Spindelmodule (10.1, 10.2) unabhängig voneinander entlang einer horizontalen Translationsachse (Z3, Z3') verfahrbar an einem Spindelmodulhalter (5) angeordnet sind.

6. Werkstückbearbeitungsvorrichtung nach einem der vorhergehenden Ansprüche, wobei
- die Spindelmodule (10.1, 10.2) unabhängig voneinander um eine Rotationsachse (X3, X3') schwenkbar an dem Spindelmodulhalter (5) angeordnet sind, und/oder
- die Spindeln (11.1, 11.2) um eine Rotationsachse (X3, X3') schwenkbar an dem jeweiligen Spindelmodul (10.1, 10.2) angeordnet sind.

7. Werkstückbearbeitungsvorrichtung nach einem der vorhergehenden Ansprüche, wobei diese ein Maschinenbett (7) aufweist, wobei an dem Maschinenbett der Spindelmodulhalter (5) angeordnet ist und entlang einer Translationsachse (X) relativ zum Maschinenbett verfahrbar ist.

8. Werkstückbearbeitungsvorrichtung nach dem vorhergehenden Anspruch, wobei an dem Maschinenbett (7) ein Tisch (6) angeordnet ist.

9. Werkstückbearbeitungsvorrichtung nach dem vorhergehenden Anspruch, wobei der Tisch (6) entlang der Translationsachse (X) relativ zum Maschinenbett (7) verfahrbar ist.

10. Werkstückbearbeitungsvorrichtung nach einem der beiden vorhergehenden Ansprüche, wobei an dem Tisch (6) eine Werkstückspannvorrichtung (20) mit einer Werkstückaufnahme (21) angeordnet ist, die um drei Achsen (X1, Y1, Z1) schwenkbar und/oder rotierbar ist.

11. Werkstückbearbeitungsvorrichtung nach dem vorhergehenden Anspruch, wobei an dem Tisch (6) ein Abrichter angeordnet ist.

12. Werkstückbearbeitungsvorrichtung, wobei diese zumindest drei Spindelmodule (10.1, 10.2, 10.3) aufweist, wobei das dritte Spindelmodul (10.3) so ausgestaltet und am dem Spindelmodulhalter (5) angeordnet ist, dass die Längsachse (LA3) der Spindel (11.3) des dritten Spindelmoduls (10.3) in einem vorbestimmten Winkel zu den Längsachsen (LA1, LA2) der beiden ersten Spindeln (11.1, 11.2) anordenbar ist.

13. Werkstückbearbeitungsvorrichtung nach einem der vorhergehenden Ansprüche, wobei der Werkzeugwechsler (30) ein Wechselwerkzeug (31) aufweist, das um eine Rotationsachse (Z4) rotierbar an dem Werkzeugwechsler (30) angeordnet ist und das zumindest zwei Werkzeugaufnahmen (32) zur Aufnahme eines Werkzeuges aufweist.

14. Werkstückbearbeitungsvorrichtung nach dem vorhergehenden Anspruch, wobei das Wechselwerkzeug (31) doppelt so viele Werkzeugaufnahmen (32) aufweist wie Spindeln an dem Spindelmodulhalter (5) angeordnet sind.

15. Werkstückbearbeitungsvorrichtung nach einem der beiden vorhergehenden Ansprüche, wobei der Werkzeugwechsler (30) um eine vertikale Rotationsachse (Y4') rotierbar ist und wobei der Werkzeugwechsler (30) um eine vertikale Translationsachse (Y4) verfahrbar ist.

16. Werkstückbearbeitungsvorrichtung nach einem der vorhergehenden Ansprüche, wobei in dem Werkzeugmagazin (35) eine Anzahl von Werkzeugen, insbesondere Schleifscheiben, Abrichter, Messtaster, Schweißeinrichtungen und/oder Kühlmitteldüsen aufgenommen sind, wobei die Werkzeuge an einer Transporteinrichtung (36) angeordnet sind, mit der ein vorbestimmtes Werkzeug der Anzahl von Werkzeugen in eine Übergabeposition (37) transportierbar ist, in der das vorbestimmte Werkzeug von dem Werkzeugwechsler (30) aus dem Werkzeugmagazin (35) entnehmbar ist.

17. Werkstückbearbeitungsvorrichtung nach einem der vorhergehenden Ansprüche, wobei die Spindelmodule (10.1, 10.2, 10.3) identisch aufgebaut sind und lösbar an dem Spindelmodulhalter (5) angeordnet sind.

18. Spindelmodul (10.1) für eine Werkstückbearbeitungsvorrichtung (1), insbesondere Schleifvorrichtung, wobei das Spindelmodul eine Spindel (11.1), insbesondere Schleifspindel, zur Aufnahme eines Werkzeuges (13.1), insbesondere Schleifscheibe, zumindest einen Abrichter (12.1) und zumindest eine Kühlmitteleinrichtung (14.1) aufweist, wobei der Abrichter, die Spindel und die Kühlmitteleinrichtung unabhängig voneinander und relativ zueinander verfahrbar sind.

19. Spindelmodul nach dem vorhergehenden Anspruch, wobei die Spindel (11.1) um eine Achse (X3) schwenkbar an dem Spindelmodul angeordnet ist.
